# EUROPÄISCHE PATENTSCHRIFT

(11) **EP 1 267 630 B1**
(45) Veröffentlichungstag und Bekanntmachung des Hinweises auf die Patenterteilung: **01.09.2004**
(21) Anmeldenummer: 01925537.1
(22) Anmeldetag: 09.04.2001
(51) Int. Cl.: A22C 13/00

(54) **VERFAHREN ZUM HERSTELLEN EINER HÜLLE MIT GRÖSSERER LÄNGE FÜR LEBENSMITTEL**
METHOD FOR PRODUCING A SLEEVE THAT HAS A GREATER LENGTH AND IS USED FOR FOOD
PROCEDE DE PRODUCTION D'UNE GAINE DE LONGUEUR SUPERIEURE, DESTINEE A DES PRODUITS ALIMENTAIRES

(30) Priorität: 07.04.2000 DE 10017172
(43) Veröffentlichungstag der Anmeldung: 02.01.2003
(73) Patentinhaber: Cds-Crailsheimer Darmsortierbetrieb Gmbh, 74564 Crailsheim (DE)
(72) Erfinder: BRETTSCHNEIDER, Hartmut, 32602 Vlotho (DE)
(74) Vertreter: Mierswa, Klaus, Dipl.-Ing.
(86) Internationale Anmeldenummer: PCT/EP2001/004047
(87) Internationale Veröffentlichungsnummer: WO 2001/076377

(56) Entgegenhaltungen:
- WO-A-94/07371
- DE-A- 3 340 669
- DE-A- 19 531 831
- DE-C- 679 748
- US-A- 4 792 047

## Beschreibung

Die Erfindung bezieht sich auf ein Verfahren zum Herstellen einer Hülle mit größerer Länge für Lebensmittel, insbesondere für Würste, aus einer Mehrzahl von einzelnen Hüllenabschnitten aus Naturdärmen, welche Kollagene enthalten, unter Verwendung eines Domes, auf welchen ein erster Hüllenabschnitt aufgeschoben und ein nachfolgender zweiter Hüllenabschnitt ebenfalls aufgeschoben wird dergestalt, daß sich die einander zugewandten Endbereiche der beiden Hüllenabschnitte auf dem Dorn überlappen und ein überlappender Bereich von Hüllenabschnitten entsteht gemäß dem Oberbegriff des Anspruchs 1 sowie auf eine Vorrichtung hierzu gemäß dem Oberbegriff des Anspruchs 7.

### Stand der Technik:

Insbesondere in Fleisch verarbeitenden Betrieben oder in der Fleischindustrie werden zum Herstellen von Würsten Hüllen bzw. Därme (z.B. Natur- oder Kunstdärme) benötigt, und zwar für eine rationelle Fertigung möglichst als endloses Material oder zumindest in größeren Längen. Speziell Naturdärme stehen in der Regel nur mit kürzeren Längen zur Verfügung, was eine rationelle Fertigung beeinträchtigt.

Aus der DE 679 748 ist ein Verfahren zur Herstellung langer Wursthüllen bekannt, welches darauf beruht, daß die Enden von Darmstücken ineinandergesteckt und dann miteinander vernäht oder verklebt werden, was einen erheblichen Aufwand an Arbeit und Zeit bedeutet.

Aus der DE 30 29 808 C2 ist ein Verfahren für das Bereitstellen von mehreren Naturdarmabschnitten, in welche Fleisch eingeschoben werden soll, auf einer gemeinsamen Hülse bekannt. Hierbei werden die Darmabschnitte so auf die Hülse aufgeschoben, daß jeweils zwei aufeinanderfolgende Darmabschnitte sich überlappen. Das Ende des ersten Darmabschnittes wird in den Anfang des zweiten, das Ende des zweiten in den Anfang des dritten eingeführt, usw., so daß eine Art fortlaufender Darm entsteht. Die einzelnen Darmabschnitte werden hierbei jedoch nicht miteinander verbunden.

Aus der DE 195 31 831 A1 ist ein Verfahren zum Verschweißen von Naturdärmen mit Ultraschall wurstherstellende Industrie bekannt geworden, wobei kurze, zwischen zwei bis drei Zentimeter sich überlappende Naturdarmabschnitte zur Verfügung gestellt werden, bei denen die Naturdarmabschnitte an ihrer Überlappungsstelle mittels Ultraschallverschweißung dauerhaft verbunden sind, wobei die zum Verschweißen erforderliche Verschweißtemperatur allein durch den Ultraschall erzeugt werden soll. Es wird des Weiteren hierzu ein Raffwerkzeug verwendet, wobei die Naturdarmabschnitte von der bedienenden Person auf das Raffwerkzeug aufgebracht werden und sich zwei benachbarte Darmabschnitte überlappen. Die Bedienungsperson hält, nachdem eine sich überlappende Stelle zweier benachbarter Darmabschnitte erzeugt worden ist, das Raffwerkzeug unter oder zwischen die an der Raffmaschine befestigte Ultraschallquelle und löst eine Ultraschallwelle aus, welche die Naturdärme miteinander verbindet. Auf diese Weise wird entweder eine verschweißte kreisförmige Fläche auf der Oberseite und/oder auf der Unterseite der Überlappungsstelle oder eine Fläche über den gesamten Umfang der Überlappungsstelle mit variabler Länge erzeugt.

Aus der WO 9407371 A ist ein Verfahren und eine Vorrichtung zum Verschließen von offenen Wurstenden bekanntgeworden, wozu keilförmige, sich gegenüberstehende Backen verwendet werden, welche während einer vorbestimmten Zeitspanne Wärme in die Wurstenden einleiten. Hierzu liegen die Backen auf den verdrillten Wurstenden auf.

Aufgabe der Erfindung ist es, ein Verfahren aufzuzeigen und eine Vorrichtung zu schaffen, welche es erlauben, auf rationelle Weise aus einer Mehrzahl oder Vielzahl von einzelnen Hüllenabschnitten, welche Abschnitte aus Naturdarm sein können, eine fortlaufende Folge von fest miteinander verbunden Abschnitten herzustellen.

Diese Aufgabe wird erfindungsgemäß gelöst durch ein Verfahren zum Herstellen einer Hülle mit größerer Länge für Lebensmittel, insbesondere für Würste, aus einer Mehrzahl von einzelnen Hüllenabschnitten aus Naturdärmen, welche Kollagene enthalten, unter Verwendung eines Domes, auf welchen ein erster Hüllenabschnitt aufgeschoben und ein nachfolgender zweiter Hüllenabschnitt ebenfalls aufgeschoben wird dergestalt, daß sich die einander zugewandten Enden der beiden Hüllenabschnitte auf dem Dorn überlappen und ein überlappender Bereich von Hüllenabschnitten entsteht, wobei auf den überlappenden Bereich der beiden Hüllenabschnitte vorübergehend gleichzeitig Hitze und Druck aufgebracht wird dergestalt, dass die Hüllenabschnitte im überlappenden Bereich zumindest teilweise miteinander verschweißt werden, wozu der überlappende Bereich in einem Druck- oder Klemmspalt eines beheizbaren Werkzeugs angeordnet wird und darin unter Beibehaltung der schlauchartigen Hülle das Verschweißen erfolgt.

In Ausführung der Erfindung erfolgt somit das Verschweißen des überlappenden Bereichs durch die Anordnung desselben in einem Druck- oder Klemmspalt eines beheizbaren Werkzeugs.

Das erfindungsgemäße Verfahren dient dazu, mehrere Stücke einer kollagenhaltigen, schlauchartigen Hülle für Lebensmittel, insbesondere Würste, miteinander zu verbinden, um so ein möglichst "endloses" Material zum Herstellen von Lebensmitteln in einer diese umgebenden Haut oder Hülle bzw. Darm, insbesondere von Würsten zu erhalten.

Das Erhitzen des überlappenden Bereichs kann z.B. elektrisch oder durch Einstrahlen elektromagnetischer Strahlung oder durch Einstrahlen von Ultraschall erfolgen. Als elektromagnetische Strahlung kann z.B. Laserlicht, Infrarot-Strahlung oder Mikrowellenstrahlung verwendet werden. Der überlappende Bereich bzw. das Kollagenmaterial werden bevorzugt auf eine Temperatur bis zu 200 °C erhitzt.

Der überlappende Bereich ist bevorzugt in einem Ringspalt zwischen wenigstens einer inneren beheizbaren Backe und wenigstens einer diese konzentrisch umgebenden äußeren beheizbaren Backe angeordnet, wobei der Ringspalt mindestens abschnittsweise mittels mindestens eines Mechanismus so verengt werden kann, daß mindestens ein Teil des überlappenden Bereichs mit dem Anpreßdruck beaufschlagt wird und zugleich die Backen beheizt werden.

Die innere Backe kann innerhalb des Dornes bzw. an demselben angeordnet sein. In einer Ausführungsform der Erfindung ist die innere Backe über einen ersten beheizbaren Einsatz und die äußere Backe über einen zweiten beheizbaren Einsatz beheizbar.

Statt der Hüllenabschnitten aus Naturdärmen können zur Durchführung des Verfahrens solche aus Kunststoffdärmen verwendet werden, welche kollagenhaltiges Material enthalten.

Die Aufgabe wird des Weiteren durch eine Vorrichtung zum Herstellen einer Hülle mit größerer Länge für Lebensmittel, insbesondere für Würste, aus einer Mehrzahl von einzelnen Hüllenabschnitten aus Naturdärmen, welche Kollagene enthalten, unter Verwendung eines Domes gelöst, auf welchen ein erster Hüllenabschnitt aufgeschoben und ein nachfolgender zweiter Hüllenabschnitt ebenfalls aufgeschoben ist dergestalt, daß sich die einander zugewandten Endbereiche der beiden Hüllenabschnitte auf dem Dorn überlappen und ein überlappender Bereich von Hüllenabschnitten entsteht, wobei der überlappende Bereich in einem Druck- oder Klemmspalt eines beheizbaren Werkzeugs angeordnet ist, mittels desselben auf den überlappenden Bereich der beiden Hüllenabschnitte vorübergehend gleichzeitig Hitze und Druck aufbringbar ist, wodurch das Verschweißen der Hüllenabschnitte miteinander im überlappenden Bereich unter Beibehaltung der schlauchartigen Hülle zumindest teilweise erfolgt.

Kurzbeschreibung der Zeichnung, in welcher zeigen:
- Fig. 1: zwei sich überlappende Hüllenabschnitte, wobei der erste Hüllenabschnitt auf einem Dorn angeordnet ist und sich der Überlappungsbereich zwischen einer äußeren Backe und dem Dorn befindet,
- Fig. 2: ein Detail von Fig. 1, wobei im Gegensatz zu Fig. 1 der Dorn, die innere und die äußere Backe jeweils im Querschnitt gezeigt sind.

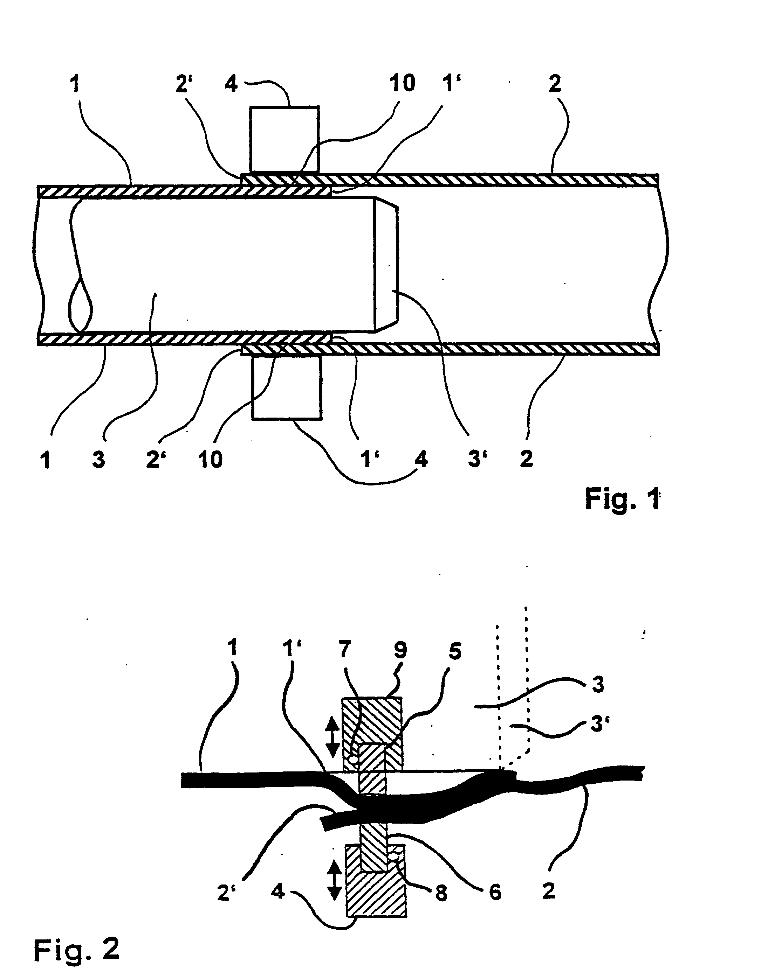

Bevorzugte Ausführungsform der Erfindung werden im Folgenden anhand der Figur 1 und 2, die jeweils in sehr vereinfachter Darstellung bevorzugte Einrichtungen zum Durchführen des erfindungsgemäßen Verfahrens zeigen, näher erläutert.

Fig. 1 zeigt zwei sich überlappende miteinander zu verbindende kollagenhaltige Hüllenabschnitte 1 und 2, wobei der erste Hüllenabschnitt 1 auf einem Dorn 3 angeordnet ist. Auf den Dorn 3, welcher ein freies Ende 3' aufweist, ist ein Endbereich 2' des zweiten Hüllenabschnitts 2 derart aufgeschoben, dass sich ein Endbereich 1' des ersten Hüllenabschnitts mit dem Endbereich 2' des zweiten Hüllenabschnitts nahe dem freien Ende 3' des Dorns 3 überlappt, wobei sich der Überlappungsbereich 10 zwischen einer äußeren Backe 4 und dem Dorn 3 befindet. In Fig. 1 sind die äußere Backe 4 und der Dorn in Draufsicht, die Hüllenabschnitte 1, 2 jedoch im Querschnitt dargestellt.

Das Verbinden der beiden Endbereiche 1' und 2' miteinander erfolgt dadurch, daß der Überlappungsbereich 10 erhitzt und einem Druck ausgesetzt wird, wobei durch Denaturierung des Kollagen-Materials die Verbindung zwischen den Endbereichen 1' und 2' der beiden Hüllenstücken 1 und 2 erreicht wird.

Fig. 2 zeigt ein Detail von Fig. 1. Sowohl die Erhitzung als auch das Aufbringen des Drucks erfolgen mittels mindestens einer inneren Backe 9 und einer äußeren Backe 4 (Fig. 2). Im Gegensatz zu Fig. 1 sind in Fig. 2 nicht nur die Hüllenabschnitte 1, 2, sondern auch der Dorn 3 , die innere und die äußere Backe 9, 4 jeweils im Querschnitt gezeigt.

Die innere Backe 9 weist einen beheizbaren Einsatz 5 und die äußere Backe 4 einen beheizbaren Einsatz 6 auf. Die innere Backe am Dorn 3 angeordnet und schließt in einer Ausführungsform bündig mit dessen Außenfläche ab.

In einer Ausgangsstellung (nicht gezeigt) weist die äußere Backe 4 einen relativ großen Abstand vom Dorn 3 auf. Sie ist mittels eines nicht gezeigten Verstellmechanismus nach innen in Richtung des Dorns 3 so in eine Arbeitsstellung verfahrbar, daß die Backe 4 die sich den Überlappungsbereich 10 auf einer geschlossenen Linie dicht umschließt, so daß dieser in einem zwischen dem Domende 3' und den Backen 4 gebildeten Klemm- oder Arbeitsspalt aufgenommen ist. In einer bevorzugten Ausführungsform ist in analoger Weise auch die innere Backe 9 radial zum Dorn 3 verfahrbar. Die Richtungen der Verfahrbarkeit der Backen 4, 9 sind in Fig. 2 jeweils mit Doppelpfeilen angegeben.

In einer anderen Ausführungsform der Erfindung ist um das freie Dornende 3' eine mehrere Backen 4 aufweisende Backenanordnung vorgesehen. Die Backen 4 sind beheizt und radial zum Dorn 3 aus einer Ausgangsstellung, in der die Backen 4 einen relativ großen Abstand vom Dorn 3 besitzen, in eine Arbeitsstellung zustellbar, in der die Backen 4 die sich überlappenden Enden 1' und 2' auf einer geschlossenen Linie dicht umschließen, die Enden 1' und 2' also in einem zwischen dem Dornende 3' und den Backen 4 gebildeten Klemm- oder Arbeitsspalt aufgenommen sind.

Die Begrenzungsflächen des Klemm- oder Arbeitsspaltes können jeweils von an dem Dorn 3 oder den inneren Backen 9 angeordneten ringsegmentartigen Einsätzen 5 und von ringsegmentartigen Einsätzen 6 der äußeren Backen 4 gebildet sein.

Die Temperatur der Backen 4 und/oder die Zeitdauer, über die die Backen 4 in der Arbeitsstellung verweilen, sind so gewählt, dass im Überlappungsbereich 10 ein Verbinden bzw. Verschweißen der Endbereiche 1' und 2' der Hüllenabschnitte 1, 2 erfolgt, und zwar ohne Beschädigung oder ohne ein Verbrennen des kollagenhaltigen Materials. Im Detail sind Zeit und Temperatur so gewählt, dass auch unter Berücksichtigung der vorhandenen Feuchtigkeit die Querbindung zwischen dem Kollagenfilament kurzfristig aufgehoben und dann bei Abkühlen erneut gebildet werden, und zwar dann auch zwischen den Endbereichen 1' und 2'. Im Detail sind die Temperatur der Backen 4 und die Behandlungszeit so eingestellt, dass die Temperatur im Material der Enden 1' und 2' etwa im Bereich bis 200 °C liegt.

Der Dorn 3 sowie die Backen 4, 9 bestehen bevorzugt jeweils zumindest im Bereich der beheizbaren Einsätze 5 und 6 aus einem wärmeisolierenden Material, so dass nur die Einsätze 5 und 6 mit relativ geringen Massen beheizt werden müssen und daher auch eine schnelle und genaue Temperaturregelung unter Verwendung von an den beheizbaren Einsätzen 5 und 6 vorgesehenen Sensoren 7 und 8 (Temperaturmesssensoren) möglich ist.

Die zum Verschweißen notwendige Wärmeenergie kann auch auf andere Weise am Verbindungsbereich zwischen den Enden 1' und 2' erzeugt werden, beispielsweise durch Ultraschall, durch Hochfrequenz bzw. Mikrowellenstrahlung sowie durch Laserstrahlung.

### Gewerbliche Anwendbarkeit:

Die Erfindung ist gewerblich anwendbar zur Herstellung einer fortlaufenden Naturdarmhülle für die Produktion von Lebensmitteln, insbesondere von Würsten.

### Bezugszeichenliste:

- 1,2: Hüllenstücke
- 1', 2': Hüllenende
- 3,: Dorn
- 3': Dornende
- 4, 9: innere, äußere Backe
- 5, 6: beheizbare Einsätze von 4, 9
- 7,8: Temperaturmesssensor
- 10: überlappender Bereich

## Patentansprüche

1. Verfahren zum Herstellen einer Hülle mit größerer Länge für Lebensmittel, insbesondere für Würste, aus einer Mehrzahl von einzelnen Hüllenabschnitten (1,2) aus Naturdärmen, welche Kollagene enthalten, unter Verwendung eines Dornes (3), auf welchen ein erster Hüllenabschnitt (1) aufgeschoben und ein nachfolgender zweiter Hüllenabschnitt (2) ebenfalls aufgeschoben wird dergestalt, daß sich die einander zugewandten Endbereiche (1',2') der beiden Hüllenabschnitte (1,2) auf dem Dorn (3) überlappen und ein überlappender Bereich (10) von Hüllenabschnitten (1,2) entsteht,
**dadurch gekennzeichnet,**
**dass** auf den überlappenden Bereich (10) der beiden Hüllenabschnitte (1,2) vorübergehend gleichzeitig Hitze und Druck aufgebracht wird dergestalt, daß die Hüllenabschnitte (1,2) im überlappenden Bereich (10) zumindest teilweise miteinander verschweißt werden, wozu der überlappende Bereich (10) in einem Druck- oder Klemmspalt eines beheizbaren Werkzeugs angeordnet wird und darin unter Beibehaltung der schlauchartigen Hülle das Verschweißen erfolgt.

2. Verfahren nach Anspruch 1, **dadurch gekennzeichnet,**
**dass** das Erhitzen des überlappenden Bereichs (10) elektrisch oder durch Einstrahlen elektromagnetischer Strahlung oder durch Einstrahlen von Ultraschall erfolgt.

3. Verfahren nach Anspruch 2, **dadurch gekennzeichnet, daß**
als elektromagnetische Strahlung Laserlicht, Infrarot-Strahlung oder Mikrowellenstrahlung verwendet wird.

4. Verfahren nach Anspruch 1, **dadurch gekennzeichnet,**
**dass** der überlappende Bereich (10) bzw. das Kollagenmaterial auf eine Temperatur bis zu 200 °C erhitzt wird.

5. Verfahren nach Anspruch 1, **dadurch gekennzeichnet,**
**daß** der überlappende Bereich in einem Ringspalt zwischen wenigstens einer inneren beheizbaren Backe (9) und wenigstens einer diese konzentrisch umgebenden äußeren beheizbaren Backe (4) angeordnet wird, wobei der Ringspalt mindestens abschnittsweise mittels mindestens eines Mechanismus so verengt werden kann, daß mindestens ein Teil des überlappenden Bereichs (10) mit dem Anpreßdruck beaufschlagt wird und zugleich die Backen (4,9) beheizt werden.

6. Verfahren nach Anspruch 1, **dadurch gekennzeichnet,**
**dass** statt der Hüllenabschnitten (1,2) aus Naturdärmen zur Durchführung des Verfahrens solche aus Kunststoffdärmen verwendet werden, welche kollagenhaltiges Material enthalten.

7. Vorrichtung zum Herstellen einer Hülle mit größerer Länge für Lebensmittel, insbesondere für Würste, aus einer Mehrzahl von einzelnen Hüllenabschnitten (1,2) aus Naturdärmen, welche Kollagene enthalten, unter Verwendung eines Domes (3), auf welchen ein erster Hüllenabschnitt (1) aufgeschoben und ein nachfolgender zweiter Hüllenabschnitt (2) ebenfalls aufgeschoben ist dergestalt, daß sich die einander zugewandten Endbereiche (1',2') der beiden Hüllenabschnitte (1,2) auf dem Dorn (3) überlappen und ein überlappender Bereich (10) von Hüllenabschnitten (1,2) entsteht, **dadurch gekennzeichnet,**
**dass** der überlappende Bereich (10) in einem Druck- oder Klemmspalt eines beheizbaren Werkzeugs angeordnet ist, mittels desselben auf den überlappenden Bereich (10) der beiden Hüllenabschnitte (1,2) vorübergehend gleichzeitig Hitze und Druck aufbringbar ist, wodurch das Verschweißen der Hüllenabschnitte (1,2) miteinander im überlappenden Bereich (10) unter Beibehaltung der schlauchartigen Hülle zumindest teilweise erfolgt.

8. Vorrichtung nach Anspruch 7, **dadurch gekennzeichnet,**
**dass** sich der Überlappungsbereich (10) zwischen einer äußeren heizbaren Backe (4) und dem Dorn (3) befindet.

9. Vorrichtung nach Anspruch 7, **dadurch gekennzeichnet,**
**dass** um das freie Dornende (3') eine mehrere beheizbare Backen (4) aufweisende Backenanordnung vorgesehen ist.

10. Vorrichtung nach Anspruch 9, **dadurch gekennzeichnet,**
**dass** die Backen (4) radial zum Dorn 3 aus einer Ausgangsstellung, in der die Backen (4) einen relativ großen Abstand vom Dorn (3) besitzen, in eine Arbeitsstellung zustellbar sind, in der die Backen (4) die sich überlappenden Enden (1',2') auf einer geschlossenen Linie dicht umschließen, wodurch die Enden (1',2') in dem zwischen dem Dornende (3') und den Backen (4) gebildeten Klemm- oder Arbeitsspalt aufgenommen sind.

11. Vorrichtung nach Anspruch 7, **dadurch gekennzeichnet,**
**daß** zwischen wenigstens einer inneren beheizbaren Backe (9) und wenigstens einer diese konzentrisch umgebenden äußeren beheizbaren Backe (4) der Druckoder Klemmspalt bzw. Ringspalt gebildet ist, welcher mindestens abschnittsweise mittels mindestens eines Mechanismus derart verengbar ist, daß mindestens ein Teil des überlappenden Bereichs (10) der beiden Hüllenabschnitte (1,2) mit dem Anpreßdruck beaufschlagbar ist und zugleich die Backen (4,9) beheizt werden.

12. Vorrichtung nach Anspruch 11, **dadurch gekennzeichnet,**
**daß** die innere Backe (9) innerhalb des Dornes (3) bzw. an demselben angeordnet ist.

13. Vorrichtung nach Anspruch 11, **dadurch gekennzeichnet,**
**daß** die innere Backe (9) über einen ersten beheizbaren Einsatz (5) und die äußere Backe (4) über einen zweiten beheizbaren Einsatz (6) beheizbar ist.

14. Vorrichtung nach Anspruch 11 oder 12, **dadurch gekennzeichnet,**
**dass** die Begrenzungsflächen des Klemm- oder Arbeitsspaltes durch jeweils von an dem Dorn (3) oder den inneren Backen (9) angeordneten ringsegmentartigen Einsätzen (5) und von ringsegmentartigen Einsätzen (6) der äußeren Backen (4) gebildet sind.

## Claims

1. A method for the production of a casing with a longer length for foodstuffs, especially for sausages, said casing comprising a plurality of individual casing sections (1, 2) made of natural intestines which contain collagen, using a mandrel (3) onto which a first casing section (1) is pushed and onto which a subsequent second casing section (2) is likewise pushed in such a way that the end areas (1', 2') of the two casing sections (1, 2) facing each other overlap on the mandrel (3), thus forming an overlapping area (10) of casing sections (1, 2), **characterized in that**
heat and pressure are applied simultaneously for some time to the overlapping area (10) of the two casing sections (1, 2) in such a way that the casing sections (1, 2) in the overlapping area (10) are at least partially fused together, for which purpose the overlapping area (10) is arranged in a pressure or pinch gap of a heatable tool where the fusing takes place, while retaining the tube-like casing.

2. The method according to Claim 1, **characterized in that**
the overlapping area (10) is heated electrically or by means of irradiation with electromagnetic radiation or by means of irradiation with ultrasound.

3. The method according to Claim 2, **characterized in that**
laser light, infrared radiation or microwave radiation are employed as the electromagnetic radiation.

4. The method according to Claim 1, **characterized in that**
the overlapping area (10) or the collagen material is heated to a temperature of up to 200°C [392°F].

5. The method according to Claim 1, **characterized in that**
the overlapping area is arranged in an annular gap between at least one heatable inner jaw (9) and at least one heatable outer jaw (4) that surrounds the former concentrically, whereby the annular gap can be constricted at least in sections by means of at least one mechanism in such a way that at least part of the overlapping area (10) is exposed to the contact pressure and, at the same time, the jaws (4, 9) are heated.

6. The method according to Claim 1, **characterized in that**,
instead of the casing sections (1, 2) made of natural intestine, casing sections made of synthetic intestines containing collagen are used for carrying out the method.

7. A device for the production of a casing with a longer length for foodstuffs, especially for sausages, said casing comprising a plurality of individual casing sections (1, 2) made of natural intestines which contain collagen, using a mandrel (3) onto which a first casing section (1) is pushed and onto which a subsequent second casing section (2) is likewise pushed in such a way that the end areas (1', 2') of the two casing sections (1, 2) facing each other overlap on the mandrel (3), thus forming an overlapping area (10) of casing sections (1, 2), **characterized in that**
the overlapping area (10) is arranged in a pressure or pinch gap of a heatable tool by means of which heat and pressure can be applied simultaneously for some time to the overlapping area (10) of the two casing sections (1, 2), as a result of which the casing sections (1, 2) are fused to each other at least partially in the overlapping area (10), while retaining the tube-like casing.

8. The device according to Claim 7, **characterized in that**
the overlapping area (10) is located between a heatable outer jaw (4) and the mandrel (3).

9. The device according to Claim 7, **characterized in that**
a jaw arrangement comprising multiple heatable jaws (4) is arranged around the free mandrel end (3').

10. The device according to Claim 9, **characterized in that** the jaws (4) can be moved radially with respect to the mandrel (3) out of a starting position in which the jaws (4) are at a relatively large distance from the mandrel (3) into a working position in which the jaws (4) tightly enclose the overlapping ends (1', 2') along a continuous line, as a result of which the ends (1', 2') are held in the pinch or working gap formed between the mandrel end (3') and the jaws (4).

11. The device according to Claim 7, **characterized in that**,
between at least one heatable inner jaw (9) and at least one heatable outer jaw (4) that surrounds the former concentrically, the pressure or pinch gap or annular gap is formed, which can be constricted at least in sections by means of at least one mechanism in such a way that at least part of the overlapping area (10) of the two casing sections (1, 2) can be exposed to the contact pressure and, at the same time, the jaws (4, 9) are heated.

12. The device according to Claim 11, **characterized in that**
the inner jaw (9) is arranged inside the mandrel (3) or else upon it.

13. The device according to Claim 11, **characterized in that**
the inner jaw (9) can be heated by a first heatable insert (5) and the outer jaw (4) can be heated by a second heatable insert (6).

14. The device according to Claim 11 or 12, **characterized in that**
the delimiting surfaces of the pinch or working gap are each formed by annular segmented inserts (5) arranged on the mandrel (3) or on the inner jaws (9) and by annular segmented inserts (6) of the outer jaws (4).

## Revendications

1. Procédé de production d'une gaine de longueur supérieure destinée à des produits alimentaires, en particulier à des saucisses, consistant en une pluralité de sections de gaines individuelles (1, 2) en boyaux, lesquels contiennent du collagène, ayant recours à une broche (3) sur laquelle est enfilée une première section de gaine (1) et sur laquelle est enfilée également une deuxième section de gaine subséquente de manière à ce que les deux zones des extrémités tournées l'une vers l'autre (1', 2') des deux sections de gaine (1, 2) se chevauchent sur la broche (3) et qu'il se produit une zone de chevauchement (10) des sections de gaine,
**caractérisé en ce que**
sur la zone de chevauchement (10) des deux sections de gaine (1, 2) est appliquée en même temps et de façon passagère de la chaleur et une pression, de manière à ce que les sections de gaine (1, 2) dans la zone de chevauchement (10) sont tout au moins partiellement soudées l'une à l'autre, ce pour quoi la zone de chevauchement (10) est disposée dans une gorge de pression ou de serrage d'un outil qui peut être chauffé et que dans cette gorge la soudure se produit tout en conservant à la gaine la forme d'un tuyau.

2. Procédé selon la revendication 1, **caractérisé en ce que**
le chauffage de la zone de chevauchement (10) se produit électriquement ou par radiation d'un rayonnement électromagnétique ou par radiation d'ultrasons.

3. Procédé selon la revendication 2, **caractérisé en ce que**
le rayonnement électromagnétique utilisé est de la lumière laser, un rayonnement à infrarouge ou un rayonnement à micro-ondes.

4. Procédé selon la revendication 1, **caractérisé en ce que**
la zone de chevauchement (10), à savoir la matière collagène est chauffée à une température jusqu'à 200 °C.

5. Procédé selon la revendication 1, **caractérisé en ce que**
la zone de chevauchement est disposée dans une gorge annulaire entre au moins l'une des mâchoires intérieures chauffantes (9) et au moins l'une des mâchoires extérieures chauffantes (4) entourant celle-ci de façon concentrique, la gorge annulaire pouvant être resserrée tout au moins par segments au moyen d'au moins un mécanisme, de manière à ce que la pression d'appui est appliquée sur au moins une partie de la zone en chevauchement (10) et que les machoires (4, 9) sont en même temps chauffées.

6. Procédé selon la revendication 1, **caractérisé en ce que**
au lieu des sections de gaine (1, 2) en boyaux, on utilise pour appliquer le procédé des boyaux en matière plastique, lesquels contiennent un matériau contenant du collagène.

7. Dispositif destiné à la production d'une gaine de longueur supérieure pour des produits alimentaires, en particulier des saucisses, consistant en une pluralité de sections de gaines individuelles (1, 2) en boyaux, lesquels contiennent du collagène, ayant recours à une broche (3) sur laquelle est enfilée une première section de gaine (1) et sur laquelle est également enfilée une deuxième section de gaine (2) subséquente de manière à ce que les deux zones des extrémités tournées l'une vers l'autre (1', 2') des deux sections de gaine (1, 2) se chevauchent sur la broche (3) et qu'il se produit une zone de chevauchement (10) des sections de gaine (1, 2),
**caractérisé en ce que**
la zone de chevauchement (10) est disposée dans une gorge de pression ou de serrage d'un outil qui peut être chauffé et au moyen duquel une pression et de la chaleur peuvent être appliquées en même temps de façon passagère sur la zone de chevauchement (10) des deux sections de gaine (1, 2), ce par quoi se produit la soudure des sections de gaine (1, 2) dans la zone de chevauchement (10), tout en conservant à la gaine la forme d'un tuyau.

8. Dispositif selon la revendication 7, **caractérisé en ce que**
la zone de chevauchement (10) se trouve entre une machoîre extérieure chauffante (4) et la broche (3).

9. Dispositif selon la revendication 7, **caractérisé en ce que**
autour de l'extrémité libre de la broche (3') est prévue une disposition de mâchoires présentant plusieurs mâchoires (4) pouvant être chauffées.

10. Dispositif selon la revendication 9, **caractérisé en ce que**
les mâchoires(4), radialement à la broche (3), peuvent être mises en place depuis une position initiale dans laquelle les mâchoires (4) possèdent un écart relativement grand par rapport à la broche (3) dans une position de travail dans laquelle les mâchoires (4) entourent hermétiquement les extrémités (1', 2') qui se chevauchent sur une ligne fermée, ce par quoi les extrémités (1', 2') sont prises dans la gorge de serrage ou de travail formée entre l'extrémité de la gorge (3') et les mâchoires (4).

11. Dispositif selon la revendication 7, **caractérisé en ce que**
entre au moins une mâchoire chauffante intérieure (9) et au moins une mâchoire chauffante extérieure (4) entourant celle-ci de façon concentrique, se forme la gorge de serrage ou de pression ou la gorge annulaire qui peut être resserrée au moins par section au moyen d'au moins un mécanisme de manière à ce qu'au moins sur une partie de la zone en chevauchement (10) des deux sections de gaine (1, 2) une pression de serrage peut être appliquée et que les mâchoires (4, 9) sont en même temps chauffées.

12. Dispositif selon la revendication 11, **caractérisé en ce que**
la mâchoire intérieure (9) est disposée à l'intérieur de la broche (3) ou sur celle-ci.

13. Dispositif selon la revendication 11, **caractérisé en ce que**
la mâchoire intérieure (9) est chauffée via un premier insert chauffant (5) et la mâchoire extérieure (4) via un deuxième insert chauffant (6).

14. Dispositif selon l'une des revendications 11 ou 12, **caractérisé en ce que**
les périphéries de la gorge de travail ou de serrage sont formées respectivement par les inserts en forme de segment annulaire (5) disposés sur la broche (3) ou les mâchoires intérieures (9) et par les inserts en forme de segment annulaire (6) des mâchoires extérieures (4).
